(19) Europäisches Patentamt
European Patent Office
Office européen des brevets

(11) Veröffentlichungsnummer: **0 242 517 B1**

# (12) EUROPÄISCHE PATENTSCHRIFT

(45) Veröffentlichungstag der Patentschrift: **17.04.91**

(51) Int. Cl.[5]: **C08F 6/22**, C08C 1/15

(21) Anmeldenummer: **87101745.5**

(22) Anmeldetag: **09.02.87**

## (54) Verfahren zur Gewinnung von Polymerisaten aus ihren Dispersionen.

(30) Priorität: **22.02.86 DE 3605798**

(43) Veröffentlichungstag der Anmeldung:
**28.10.87 Patentblatt 87/44**

(45) Bekanntmachung des Hinweises auf die Patenterteilung:
**17.04.91 Patentblatt 91/16**

(84) Benannte Vertragsstaaten:
**DE ES FR GB IT NL**

(56) Entgegenhaltungen:
**EP-A- 0 019 701**
**OA-A- 2 178**
**US-A- 2 961 290**

(73) Patentinhaber: **BAYER AG**
**W-5090 Leverkusen 1 Bayerwerk(DE)**

(72) Erfinder: **Lindner, Christian, Dr.**
**Riehlerstr. 200**
**W-5000 Köln 60(DE)**
Erfinder: **Wulff, Claus, Dr.**
**Richard Strauss-Str. 21**
**W-4150 Krefeld(DE)**
Erfinder: **Ott, Karl-Heinz, Dr.**
**Paul Klee-Str. 54**
**W-5090 Leverkusen(DE)**

**EP 0 242 517 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Gewinnung von Polymerisaten aus ihren Dispersionen durch Fällung (Koagulation) der Dispersion und Waschen des Koagulats in Anwesenheit spezieller Tricarbonsäuren.

Thermoplastische Polymerisate z.B. verschiedene Acrylnitril-Butadien-Styrol-Co-und -Pfropfcopolymerisate (ABS), Styrol/Acrylnitril-Copolymerisate (SAN), Vinylchloridpolymerisate (PVC), Methylmethacrylat-Butadien-Styrol-Co-und -Pfropfcopolymerisate (MBS) und anderer Pfropfpolymerisate von Monomeren auf verschiedenste Kautschuke, (die z.B. als Schlagzähigkeitsmodifikatoren Verwendung finden), werden häufig durch Dispersionspolymerisation erzeugt. Sie fallen somit nach der Polymerisation in Form einer Dispersion an, aus denen die Polymerisate üblicherweise nach Koagulation mit Elektrolyten isoliert werden. Anschließend müssen die Polymerisate gereinigt werden, meistens durch Waschen mit wäßrigen Flüssigkeiten. Dispersion schließt hier und im Folgenden auch Emulsion ein, Dispersionspolymerisaten umfaßt auch Emulsionsprolymerisation. Es ist bisher nicht gelungen ein Aufarbeitungsverfahren zu finden, das wirksam genug ist und ein Material mit guten Eigenschaften z.B. Filtrationsund Trocknungseigenschaften liefert ohne größeren technischen Aufwand.

Die Aufarbeitung, insbesondere das Fällmittel, sowie die nach der Wäsche im Polymerisat verbleibenden Verunreinigungen (insbesondere die Reste des Fällmittels), bestimmen wesentlich die Gebrauchseigenschaften des isolierten thermoplastischen Polymeristats.

Das US-Patent 2 961 290 betrifft die Herstellung von kautschukartigen Formkörpern durch Extrusion eines Carboxylgruppen enthaltendedn Kautschuks in Latexform in ein ein Vernetzungsmittel enthaltendes Fällbad. Dieses Bad enthält im wesentlichen Polyamin als Vernetzungsmittel. Daneben können auch Polycarbonsäuren anwesend sein.

Die vorliegende Erfindung dagegen betrifft thermoplastische Polymerisate, die über ihre Schmelzen verarbeitet und verformt werden können.

Die europäische Patentanmeldung 19 701 betrifft das Einarbeiten von 2-Phosphonobutan-1,2-dicarbonsäure-Derivaten in thermoplastische Polymerisate zur Verbesserung der Oberflächenbeschaffenheit daraus hergestellter Formkörper. Die Additive werden nachträglich durch Compoundierung in das feste Polymerisat eingearbeitet. Nach der vorliegenden Erfindung wird dagegen dem Fällmittel für den Latex oder der Waschflüssigkeit für das aus dem Latex gewonnene Coagulat ein völlig wasserlösliches Additiv zugesetzt. Dieses Additiv gelangt also nicht in das Endprodukt, sondern es dient dazu, unerwünschte Verunreinigungen aus dem Endprodukt zu entfernen.

Gegenstand der Erfindung ist ein Verfahren zur Gewinnung von thermoplastischen Polymerisaten aus ihren Dispersionen, insbesondere in wäbrigen Medien, das dadurch gekennzeichnet ist, daß man die Polymerisat-Dispersion in Anwesenheit wenigstens einer Tricarbonsäure der Formel (I)

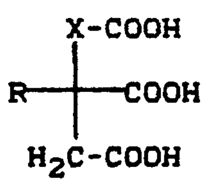

(I)

mit X = Einfachbindung, $-CH_2-$, $-C_2H_4-$
und R = H, -OH,

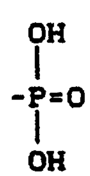

koaguliert, wobei gegebenenfalls übliche, nicht vernetzende Fällmittel zusätzlich anwesend sind, und/oder daß man das koagulierte Polymerisat mit wäßrigen Lösungen wenigstens einer Tricarbonsäure der Formel (I) wäscht.

Bevorzugte Säuren der Formel (I) sind Propantricarbonsäuren und Butantricarbonsäuren, besonders bevorzugt sind Zitronensäure und 2-Phosphonobutan-1,2,4-tricarbonsäure.

Thermoplastische Polymerisate im Sinne der Erfindung sind bevorzugt solche, die durch radikalische Polymerisation in Anwesenheit von oberflächenaktiven Stoffen (Emulgatoren) insbesondere der anionischen Art, in Dispersion erzeugt worden sind.

Beispiele sind: Homopolymerisate, Interpolymerisate sowie Pfropfcopolymerisate mit thermoplastischen Eigenschaften aus olefinisch ungesättigten Monomeren wie Styrol (und Derivate), Acrylnitril (und Derivate), Alkyl Methacrylate, Alkyl Acrylate, Vinylchlorid, Vinylidenchlorid, Vinylidenfluorid, Ethylen, Vinylacetat, Butadien, Isopren; bevorzugt sind harzartige Polymerisate von Vinylchlorid, Styrol, $\alpha$-Methylstyrol, Acrylnitril, Methacrylsäure-$C_{1-6}$-alkylester sowie Pfropfpolymerisate dieser Monomeren auf Kautschuke mit Glasübergangstemperaturen kleiner 0 °C, insbesondere wenigstens teilvernetzte Kautschuke wie Dienkautschuke, Diencopolymerkautschuke, Acrylkautschuke, EPDM-Kautschuke und Ethylencopolymerkautschuke. Diese Polymerisate sind bekannt.

Bevorzugte Thermoplaste, die die Polymerisate als Komponenten enthalten können sind PVC, SAN, Polymethylmethacrylat, Polystyrol, $\alpha$-Methylstyrolcopolymere mit Acrylnitril und/oder Methylmethacrylat, ABS, MBS, HIPS und Polyamide.

Das erfindungsgemäße Aufarbeitungsverfahren kann wie folgt ausgeführt werden:

Die Dispersionen der Polymerisate, bevorzugt in Wasser, können in einer ersten Variante des erfindungsgemäßen Verfahrens durch bekannte Maßnahmen koaguliert werden, z.B. durch die Zugabe von Säuren wie Essigsäure, Ameisensäure, Schwefelsäure, Salzsäure und/oder Salzen wie z.B. NaCl, $CaCl_2$, $MgSO_4$, Alaun, KCl, durch Temperaturänderung oder mechanische Kräfte. Das erhaltene Koagulat kann dann, gegebenenfalls nach Filtration, mit wäßrigen Lösungen von Tricarbonsäuren der Formel (I) gewaschen werden, insbesondere mit 0,5-1,5 Gew.-%igen wäßrigen Lösungen dieser Säuren. Nach Filtration und Entwässerung über z.B. Nutschen, Schleudern, Druckbandfilter kann das so gewonnene noch feuchtes Polymerisat getrocknet werden. Dieses Verfahren kann diskontinuierlich, kontinuierlich oder halbkontinuierlich durchgeführt werden; die gesamte Aufarbeitung kann auch in hintereinander geschalteten Aufarbeitungsstufen (Fällstufen) durchgeführt werden.

Die gesamte Aufarbeitung wird vorzugsweise bei Temperaturen (bis zur Trocknungsstufe) von 20 °C bis 100 °C durchgeführt. Vorzugweise arbeitet man in der Koagulationsstufe bei Temperaturen von 70 °C bis und im Waschvorgang bei Temperaturen von 20 °C bis 70 °C.

Eine andere Variante des Verfahrens kann wie folgt durchgeführt werden: Die Dispersionen werden direkt in Anwesenheit einer Tricarbonsäure der Formel (I) koaguliert; d.h. als Koaguliermittel werden wäßrige Lösungen wenigstens einer Tricarbonsäure der Formel (I), gegebenenfalls zusammen mit üblichen Koaguliermitteln wie Essigsäure, Ameisensäure, Schwefelsäure und gegebenenfalls in Kombination mit Salzen wie $MgSO_4$, NaCl, CaCl, $Na_2SO_4$ eingesetzt. Die Konzentration an Säuren der Formel (I) in diesen Lösung ist bevorzugt 0,5-15 Gew.-%. Die Koagulation selbst kann bei 20-100 °C, bevorzugt 70-100 °C, durchgeführt werden. Anschließend, gegebenenfalls nach intermediärer Filtration, wird das Koagulat zur Reinigung mit Wasser oder wäßrige Lösungen der Säuren der Formel (I) wie in der ersten Variante des Verfahrens gewaschen.

Die erfindungsgemäß erhaltenen Polymerisate zeichnen sich durch einen verbesserten Rohton und größere Thermostabilität aus (sehr geringe Verfärbungsneigung bei Temperaturbelastung). Sie sind auch erheblich reiner (ihr Gehalt an Verunreinigungen z.B. an Resten der Polymerisationshilfsstoffe, Koaguliermittel insbesondere an Metallionen, speziell Alkali- oder Erdalkalimetallionen ist besonders niedrig).

Die erfindungsgemäß erhaltenen Polymerisate eignen sich deshalb besonders zur Herstellung von Formkörpern, bei denen es auf Reinheit, Rohton und Temperaturbelastbarkeit besonders ankommt.

Stellt man hieran nur normale Anforderungen, dann können die Produkte bei höheren Temperaturen und Drucken, d.h. schneller verarbeitet werden. Auch ihre "Verarbeitungsbreite", d.h. ihre Toleranz gegenüber Schwankungen der Verarbeitungsbeingungen z.B. Temperatur und Verweilzeit im Schmelzzustand, wird erheblich verbessert.

## Beispiele

### I: Eingesetzte Polymerisatemulsionen

1) Latex eines Pfropfcopolymerisates aus 80 Gew.-% Polybutadienkautschuk mit einem mittleren Teilchendurchmesser ($d_{50}$) = 0,4 $\mu$ und 20 Gew.-% Copolymer aus 10 Gew.-% n-Butylacrylat und 90 Gew.-% Methylmethacrylat. Polymerfeststoffgehalt der Emulsion: 33 Gew.-%.

2) Latex eines Pfropfcopolymerisates aus 75 Gew.-% Polybutadienkautschuk mit einem mittleren

Teilchendurchmesser ($d_{50}$) = 0,4 μ und 25 Gew.-% Copolymer aus 26 Gew.-% Acrylnitril und 74 Gew.-% Styrol. Polymerfeststoffgehalt der Emulsion: 35 Gew.-%.

3) Latex eines Copolymerisates aus 10 Gew.-% Acrylnitril, 55,5 Gew.-% Methylmethacrylat und 34,5 Gew.-% α-Methylstyrol; Staudinger Index [η] = 0,42 $\frac{dl}{g}$ , gemessen in DMF bei 25° C. Polymerfeststoffgehalt der Emulsion: 36 Gew.-%.

Alle Latices enthalten 2,5 Gew.-% phenolischer Antioxidantien, bezogen auf den Feststoff.

II. Aufarbeitung der Emulsionen

A) Eine Mischung aus 7500 Gew.-Tl. Wasser, 150 Gew.-Tl. $MgSO_4 \cdot H_2O$ (Bittersalz) und 150 Gew.-Tl. einer Säure X werden unter Rühren auf 75° C erhitzt. Bei dieser Temperatur werden Y Gew.-Tl. Latex (mit einem Gesamtfeststoffgehalt von 1500 Gew.-Tl.) gleichmäßig unter Rühen zudosiert. Anschließend wird 15 min. bei 97° C nachgeheizt. Nach Abkühlung wird in einer Laborschleuder mit kontinuierlicher Waschvorrichtung (Durchmesser der Schleuderkammer 30 cm, 1400 $min^{-1}$) unter konstanten Bedingungen gewaschen (20 min. lang). Danach wird 5 min. trockengeschleudert und das resultierende Polymerisat bei 60° C innerhalb 48 h in einem Umlufttrockenschrank getrocknet.

**Tabelle 1**

| Beispiel | Eingesetzte Säure X | Y Gew.-Tl. Latex | | (Erd-/Alkalimetall-gehalte (ppm)) Mg | Na | K |
|---|---|---|---|---|---|---|
| 1* | Essigsäure | 4545 | Latex I.1 | 95 | 30 | 8 |
| 2 | Zitronensäure | 4545 | " | 70 | 12 | 2 |
| 3 | 2-Phosphonbutan-1,2,4-tricarbonsäure (50 % Gew.-%ige Lösung in Wasser) | 4545 | " | 65 | 10 | 2 |
| 4* | Essigsäure | 4286 | Latex I.2 | 120 | 50 | 10 |
| 5 | Zitronensäure | 4286 | " | 60 | 10 | 5 |
| 6 | 2-Phosphonobutan-1,2,4-tricarbonsäure (50 % Gew.-%ige Lösung in Wasser) | 4286 | " | 58 | 11 | 4 |
| 7* | Essigsäure | 4167 | Latex I.3 | 150 | 60 | 12 |
| 8 | Zitronensäure | 4167 | " | 55 | 8 | 5 |
| 9 | 2-Phosphonobutan-1,2,5-tricarbonsäure (50 % Gew.-%ige Lösung in Wasser) | 4167 | " | 60 | 10 | 4 |

(* Vergleichsbeispiele)

B) Eine Mischung aus 7500 Gew.-Tl. Wasser, 150 Gew.-Tl. $MgSO_4 \cdot H_2O$ (Bittersalz) und 150 Gew.-Tl. Essigsäure werden unter Rühren auf 75° C erhitzt. Bei dieser Temperatur werden 4545 Gew.-Tl. Latex I.I gleichmäßig unter Rühren eindosiert. Anschließend wird 15 min. bei 95-97° C nachgeheizt. Nach Abkühlung wird in einer Laborschleuder des Typs wie in II.A beschrieben gewaschen (15 min. lang). Danach wird mit einer 1 Gew.-% wäßrigen Lösung einer Säure X nachgewaschen (30 min. lang). Danach wird 5 min. trockengeschleudert und wie in II.A beschrieben aufgearbeitet.

**T a b e l l e 2**

| Beispiel | Eingesetzte Säure X | Erd-/Alkalimetallgehalt (ppm) | | |
|---|---|---|---|---|
| | | Mg | Na | K |
| 10* | Essigsäure | 102 | 42 | 10 |
| 11 | Zitronensäure | 60 | 10 | 7 |
| 12 | 2-Phosphonobutan-1,2,4-tricarbonsäure (50 % Gew.-%ige Lösung in Wasser) | 55 | 10 | 7 |

(*Vergleichsbeispiel)

III: Eigenschaften der isolierten Polymerisate

Als Maß für den Reinheitsgrad der isolierten Polymerisate werden die Metallgehalte (ermittelt über Atomabsorptionsspektroskopie, angegeben in ppm) ermittelt. Die Daten sind in Tabelle 1 und Tabelle 2 wiedergegeben.

Die erfindungsgemäß aufgearbeiteten Polymerisate (Beispiele 2, 3, 5, 6, 8, 9, 11, 12) weisen wesentlich niedrigere Metallkationengehalte auf.

Die Polymerisate aus den Beispielen 7, 8 und 9 (siehe Tabell 1) (je 50 Gew.-Tl.) werden mit je 50 Gew.-Tl. PVC-Masse-Polymerisat (K-Wert des PVC: 68), 0,2 Gew.-Tl. ®LOXIOL und 1,5 Gew.-Tl. ®IRGASTAB 17M auf einer Walze innerhalb von 10 min. bei 185° C compoundiert. Aus dem Compound werden danach Platten einer Dicke von 4 mm durch Pressen bei 190° C in 10 min. hergestellt.

Der Rohton der resultierenden Platten wurde danach visuell beurteilt.

**Tabelle 3**

| Platte aus Compound mit | | |
|---|---|---|
| II. 7. | Verfärbung | (-) **) |
| II. 8. | Verfärbung | (+) |
| II. 9. | Verfärbung | (++) |

**) ++ keine Verfärbung
\+ fast keine Verfärbung
\- deutliche Verfärbung

## Ansprüche

1. Verfahren zur Gewinnung von thermoplastischen Polymerisaten aus ihren Dispersionen, dadurch gekennzeichnet, daß man die Polymerisat-Dispersion in Anwesenheit wenigstens einer Tricarbonsäure der Formel I

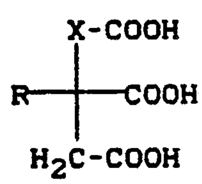

I

worin

X eine Einfachbindung, $-CH_2-$ oder $-C_2H_4-$ und

R -H, OH oder

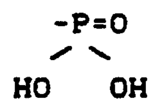

bedeuten,
koaguliert, wobei gegebenenfalls übliche Fällmittel zusätzlich anwesend sind, ausgenommen vernetzende Fällmittel, und/oder daß man das koagulierte Polymerisat mit wäßrigen Lösungen wenigstens einer Tricarbonsäure der Formel (I) wäscht.

**2.** Verfahren gemäß Anspruch 1, dadurch gekennzeichnet, daß die thermoplastischen Polymerisate Homo- oder Copolymerisate olefinisch ungesättigter Monomerer und/oder Pfropfcopolymerisate olefinisch ungesättigter Monomerer auf Kautschuke mit Glasübergangstemperaturen kleiner 0° C sind.

## Claims

**1.** A process for the recovery of thermoplastic polymers from their dispersions, characterised in that the polymer dispersion is coagulated in the presence of at least one tricarboxylic acid corresponding to formula I

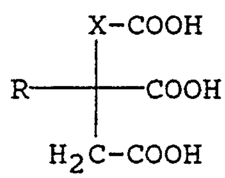

I

wherein
X denotes a single bond, $CH_2$ or $C_2H_4$ and
R denotes H, OH or

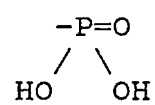

and conventional precipitating agents are optionally also present, with the exclusion of cross-linking precipitating agents, and/or in that the coagulated polymer is washed with aqueous solutions of at least one tricarboxylic acid of formula (I).

**2.** A process according to Claim 1, characterised in that the thermoplastic polymers are homo- or copolymers of olefinically unsaturated monomers and/or graft copolymers of olefinically unsaturated monomers on rubbers with glass transition temperatures below 0° C.

## Revendications

**1.** Procédé d'obtention de polymérisats thermoplastiques à partir de leurs dispersions, caractérisé en ce qu'on fait coaguler la dispersion de polymérisats en présence d'au moins un acide tricarboxylique de Formule I

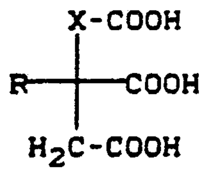

I

dans laquelle

X représente une liaison simple, $-CH_2-$ ou $-C_2H_4-$ et

R représente -H, -OH ou

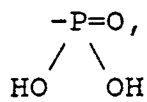

en opérant en outre, le cas échéant, en présence d'agents précipitants classiques, à l'exception d'agents précipitants entraînant une réticulation, et/ou en ce que le polymérisat coagulé est lavé avec des solutions aqueuses d'au moins un acide tricarboxylique de Formule (I).

**2.** Procédé suivant la revendication 1, caractérisé en ce que les polymérisats thermoplastiques sont des homopolymérisats ou des copolymérisats de monomères à non-saturation oléfinique et/ou des copolymérisats de greffage de monomères à non-saturation oléfinique sur des caoutchoucs, ayant des températures de transition vitreuse inférieures à 0 °C.